# EUROPEAN PATENT SPECIFICATION

(11) **EP 4 299 191 B1**
(45) Date of publication and mention of the grant of the patent: **05.11.2025**
(21) Application number: 23182696.7
(22) Date of filing: 30.06.2023
(51) Int. Cl.: B05B 11/10, B05B 11/00, A45D 40/00

(54) **REUSABLE JAR FOR COSMETICS OR OTHER LIQUID OR PASTY PRODUCTS**
WIEDERVERWENDBARES GEFÄSS FÜR KOSMETIKA ODER ANDERE FLÜSSIGE ODER PASTÖSE PRODUKTE
RÉCIPIENT RÉUTILISABLE POUR PRODUITS COSMÉTIQUES OU AUTRES PRODUITS LIQUIDES OU PÂTEUX

(30) Priority: 30.06.2022 ES 202230587
(43) Date of publication of application: 03.01.2024
(73) Proprietor: FACA FRANCE RECIPIENTS POUR COSMETIQUE, S.L., 08940 Cornella de Llobregat, Barcelona (ES)
(72) Inventor: CANAMASAS ESPAÑOL, Sergio, 08940 Cornella de Llobregat, Barcelona (ES)
(74) Representative: Clarke, Modet y Cía., S.L.

(56) References cited:
- CN-U- 215 225 324
- ES-U- 1 238 344
- US-A- 5 454 488
- US-A1- 2015 021 331

## Description

### OBJECT OF THE INVENTION

The invention, as expressed in the statement of this specification, refers to a reusable jar for cosmetics or other liquid or pasty products that provides, to the purpose for which it is intended, advantages and features, described in detail below, that represent an improvement of the current state of the art.

The object of the present invention consists of a jar for cosmetics or other liquid or pasty products, in particular, a jar consisting of an outer container with an inner flexible container and an extraction system without air intake comprising two membranes, a lower and an upper one, which define an intermediate chamber and have respective valves that connect respectively the inside of the flexible container with said chamber and the latter with the outside of the jar, preventing the product inside the container from being in contact with the product in the chamber before its extraction to the outside; this jar presents a series of improvements and refinements that basically optimize its use by allowing it to be reused, replacing the removable inner container, while at the same time increasing the efficiency of the extraction system.

### APPLICATION FIELD OF THE INVENTION

The field of application of the present invention is part of the industry sector dedicated to the manufacture of packaging, focusing particularly on the field of configuration containers in the form of wide mouth jars with extraction system without air intake.

### BACKGROUND OF THE INVENTION

As is known, there are containers for cosmetics and similar liquid or pasty products on the market that consist of a rigid bottle with a flexible inner bag, which, however, usually have an elongated configuration, in which its height is greater than its diameter, thanks to which the collapse of the inner bag, to extract the product, occurs laterally, which does not serve for wider and lower containers in the form of a jar as they are usually preferred in the field of cosmetics and the like.

Other containers with such a flexible inner bag are described in patents EP 0546898, GB 2184491, and WO 2006/107403 but they are aerosols or canisters, in which the neck of the bag and the container is much smaller than its width.

There are also bottles with piston system to extract the product but that, generally, usually have a structure that is not compatible with that of a jar wider than it is tall.

There is, however, a jar disclosed in patent FR 1252358 that refers to a container with a large opening, associated with a system of extraction and distribution without air intake that combines both techniques, i.e., the flexible bag and the piston, but that presents some disadvantages, such as the contact of the product with the air, since this can lead to a premature deterioration of the product, a high complexity of the jar structure, which increases the cost of manufacture of the container, as well as the slot shape that has the product outlet opening, since it does not allow an adequate control of its removal for use.

To solve these drawbacks, the applicant of the present invention already developed a jar that, disclosed in utility model No. ES1238344U, provides an improved system compared to what is previously known. More specifically, this document describes a wide, low jar that essentially comprises an outer container and an inner flexible container, and an extraction system without air intake made up of two membranes, one lower and one upper, which define an intermediate space between the two and have respective valves that connect respectively the inside of the flexible container with that space and this with the outside of the jar, in such a manner that with this extraction system in rest position, the product inside the container does not come into contact with the product accumulated in the intermediate space before its extraction to the outside, and therefore the bulk of the product will not deteriorate

In that regard, the objective of the present invention is to provide the market with a new, even more efficient, and practical version of said jar since, although the described jar satisfactorily fulfills its objectives of improving the above, there are aspects that can increase its practicality and efficiency.

Specifically, one of the aspects intended to be improved with the reusable jar of the present invention is precisely that of providing the possibility of reusing said jar, in order to comply with current environmental preservation and waste reduction standards, as well as to become a more economical and accessible article to the public; therefore, a new type of inner container has been developed that can be replaced when the product has been consumed, also making it possible to reuse the jar at a much more economical price by simply purchasing a replacement inner container which, logically, the manufacturer will make available to consumer users.

On the other hand, it is also an essential objective of the present invention to provide a jar with a higher efficiency of the extraction system, since this also makes it possible to contribute to greater savings, since less product will be wasted if it is more easily extractable in its entirety, avoiding the waste of remains accumulated inside the containers which cannot be extracted and which, in the long run, represent an important amount of wasted product.

The aim of the present invention is, therefore, the development of a newly improved jar of the aforementioned type.

On the other hand, and as a reference to the current state of the art, it should be noted that, although as has been described, there are other jars of the type described here, at least on the part of the applicant, it is not known of the existence of any other jar with technical and structural features equal or similar to those of the one claimed here.

### EXPLANATION OF THE INVENTION

The reusable jar for cosmetics or other liquid or pasty products that the invention proposes is configured as an ideal solution to the aforementioned objectives that, in addition, represents an improvement of the current state of the art, wherein the characterizing details that make it possible and distinguish it are conveniently collected in the final claims that accompany this description.

Specifically, what the invention proposes, as noted above, is a jar of the type consisting of an outer container having an inner flexible container in which the product is contained and an extraction system without air intake, specifically, where the inner flexible container has a base, which, when pressure is exerted on the extraction system located in the upper closure element thereof, which is hermetic, rises by vacuum effect pushing the product towards the same thanks to the folding back on itself that occurs in the flexible material in the area surrounding the said base and the side wall of the said container, and wherein said extraction system comprises two valves arranged on two membranes defining an intermediate space so as to prevent the entire product contained in the jar from becoming contaminated when it comes into contact with the air.

Specifically, a lower valve of a lower membrane is directly associated with the inner space of the inner flexible container, and another upper valve is associated with an outlet stopper located on an upper membrane that acts as an upper closure with the neck of the jar, in such a way that an intermediate space is generated between both membranes and, consequently, between both valves where a certain amount of product accumulates before its exit, and that only this small amount of product is the one that comes into contact with the air, while the rest of the product contained in the container always remains airtight.

Indeed, from this configuration of the jar already known by the aforementioned document ES1238344U, the reusable jar object of the present invention is essentially distinguished by the fact that the described inner flexible container is removable and, therefore, it can be replaced by an identical one containing the same or a similar product, so that all other elements of the jar, or at least the outer container and its lid, can be reused since, optionally, the membranes that make up the extraction system may or may not be reusable.

According to the invention, the inner flexible container is incorporated in a housing that, in addition to facilitating its removal, prevents the walls of the flexible container from deforming as the product shrinks as it is consumed.

And, preferably, this housing has an over-raised edge on which the two membranes of the extraction system fit together, which, in turn, are attached to the neck of the outer container of the jar.

At the same time, the morphology of the aforementioned membranes is designed to modify the shape of the intermediate space so that they give rise to two chambers that allow improving the efficiency of the extraction system.

Specifically, the lower membrane has a central recess, which incorporates the lower valve that connects to the inside of the internal flexible container containing the product, and an eccentric hole, where the eccentric recess of the upper membrane is located, which incorporates the upper valve that connects the intermediate chamber with the exterior and which, in turn, is covered by the stopper with the outlet orifice, defining in the area between the eccentric hole and the eccentric recess of the upper membrane, a first chamber of the intermediate space, in which a small quantity of product accumulates when the extraction system is at rest.

And, in turn, the central recess for the lower valve is extended at the top in a lateral depression of shape and size coinciding with the protrusion of the upper membrane on which the pressure is exerted to generate the vacuum and to ensure the extraction of the product, a second chamber in the intermediate space between the two membranes, delimited by both complementary shapes, is defined in this area to facilitate the vacuum generation effect, and in which another small portion of product will accumulate, separated from the product accumulated in the first chamber.

### DESCRIPTION OF THE FIGURES

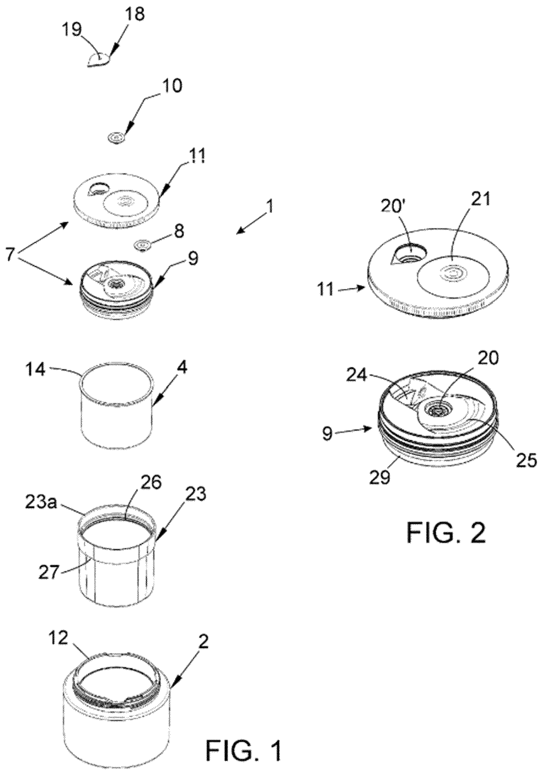

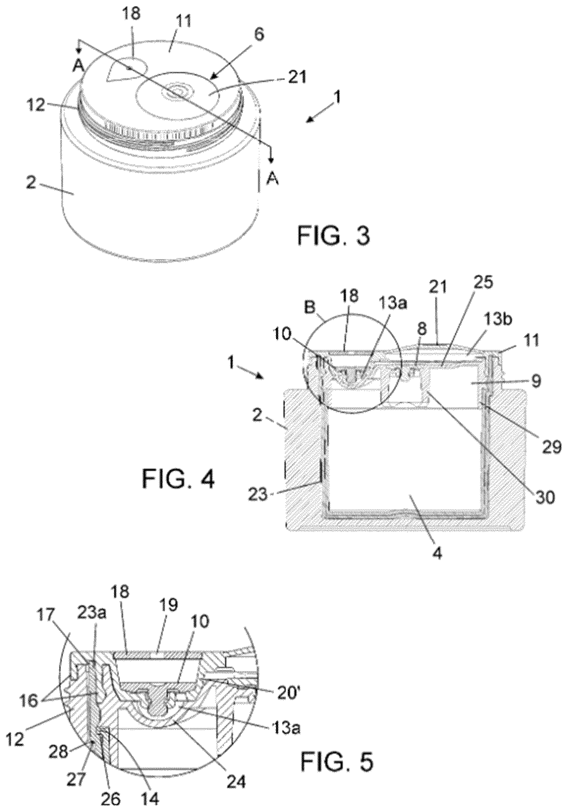

To complement the description being made and in order to assist in a better understanding of the features of the invention, the present specification is accompanied by, as an integral part of it, a set of drawings in which, by way of illustration and not limitation, the following has been depicted:
Figure number 1. It shows a perspective and explosion view of an example of the embodiments of the reusable jar for cosmetics or other liquid or pasty products, object of the invention, appreciating each of the parts and elements comprised, as well as the configuration and arrangement thereof;
Figure number 2. It shows an enlarged perspective view of the two membranes that comprise the upper closure of the jar, appreciating in greater detail the parts and elements thereof;
Figure number 3. It shows a perspective view of the jar example, according to the invention, shown in Figure 1, in this case represented once assembled;
Figure number 4. It shows an elevation and section view of the assembled jar, according to the A-A cut indicated in Figure 3; and
Figure number 5. It shows an enlarged view of detail B indicated in Figure 4.

### PREFERRED EMBODIMENT OF THE INVENTION

In view of the above figures, an example of the non-limiting embodiment of the reusable jar for cosmetics or other liquid or pasty products of the invention can be seen in them, which includes what is described in detail below, in accordance with the numbering adopted, according to the following list:
- 1.: jar
- 2.: outer container
- 4.: flexible container, inner
- 6.: extraction system
- 7.: upper closure
- 8.: lower valve
- 9.: lower membrane
- 10.: upper valve
- 11.: upper membrane
- 12.: neck, of the outer container
- 13a.: first chamber, of the intermediate space
- 13b.: second chamber, of the intermediate space
- 14.: upper flange, of the flexible container
- 16.: double skirt, of the upper membrane
- 17.: groove, of the upper membrane
- 18.: stopper
- 19.: orifice, outlet
- 20.: central recess, of the lower membrane
- 20'.: eccentric recess, of the upper membrane
- 21.: protrusion, of the upper membrane
- 23.: housing, of the flexible container
- 23a.: upper edge, of the housing
- 24.: eccentric hole, of the lower membrane
- 25.: lateral depression, of the central recess of the lower membrane
- 26.: inner step, of the housing
- 27.: outer ledge, of the housing
- 28.: pocket, from the inner wall of the neck of the outer container
- 29.: lower perimeter skirt, of the lower membrane
- 30.: lower tubular extension, of the lower membrane

Thus, as shown in these figures, the jar (1) of the invention is known to comprise an outer container (2) incorporating an inner flexible container (4) containing the product, and an extraction system (6) without air intake provided in a sealed upper closure (7) comprising:
- a lower membrane (9) with a lower valve (8) housed in a central recess (20) of said membrane, which connects the inner space of the flexible container (4) with an intermediate space between the lower membrane (9) and an upper membrane (11);
   and
- an upper membrane (11) with a protrusion (21) on which pressure is exerted to cause a vacuum and an upper valve (10) which, housed in an eccentric recess (20') of this membrane, connects the above intermediate space with the outside of the jar (1) and on which a stopper (18) with an outlet orifice (19) is incorporated,
such that the product contained in the intermediate space, with the extraction system (6) in the rest position, does not come into contact with the product contained inside the flexible container (4).

And, from this already known configuration, the reusable jar (1) distinguishes itself, essentially, in that the inner flexible container (4) is removable and replaceable, preferably being incorporated in a rigid housing (23) to which it is attached through a flange (14) intended for this purpose in said flexible container (4), and where the morphology of the respective lower (9) and upper (11) membranes defines two chambers (13a, 13b) differentiated in the intermediate space between them in correspondence with the respective lower (8) and upper (10) valves, such as to improve the efficiency of the extraction system (6).

In particular, the lower membrane (9), which has a central recess (20) where the lower valve (8) that connects with the interior of the flexible container (4) containing the product is incorporated, also has an eccentric hole (24), where the eccentric recess (20') of the upper membrane (11) into which the upper valve (10) is incorporated fits, and which is covered with the stopper (18) with the outlet orifice (19), defining a first chamber (13a) of the intermediate space.

And, on the other hand, the central recess (20) of said lower membrane (9) is prolonged on its upper part in a lateral depression (25) the shape, size, and position of which coincide, complementarily, with the shape, size, and position of the protrusion (21) of the upper membrane (11) defining a second chamber (13b) of the intermediate space.

In a preferred embodiment, the housing (23) of the inner flexible container (4) has an upper edge (23a), which rises above the inner flexible container (4), where the two membranes (9, 11) of the extraction system fit together, which, in turn, are attached to the neck (12) of the outer container (2), preferably a neck (12) threaded to receive an outer cap (not shown).

Preferably, on the inner side of that upper edge (23a) of said housing (23), is provided an inner step (26) where the flange (14) of the inner flexible container (4) fits. And, in turn, on the outer side of the upper edge (23a) of said housing (23), an outer ledge (27) is expected to be present resting on a pocket (28) of the inner wall of the neck (12) of the outer container (2).

In addition, preferably, the upper membrane (11) has a double perimeter skirt (16) that defines a groove (17) that fits with the upper edge of the neck (12) of the end container (2) while pressing against the upper edge (23a) of the housing (23) to seal the assembly.

On the other hand, it should be noted that, in a preferred embodiment, the lower membrane (9) has a lower perimeter skirt (29) and a lower tubular extension (30), practically flush with said skirt, which define the walls of the central recess (20) of said lower membrane (9).

Finally, in a preferred embodiment, the stopper (18) with the outlet orifice (19) that closes the upper valve (10) is fitted into the eccentric recess (20') of the upper membrane (11), flush with the surface thereof.

Having sufficiently described the nature of the present invention, as well as the way to implement it, it is not considered necessary to make its explanation more extensive so that any expert in the field understands its scope, as defined by the scope of the appended claims, and the advantages derived therefrom.

## Claims

1. A jar for cosmetics or other liquid or pasty products, comprising an outer container (2), an inner flexible container (4) containing the cosmetic or product, and an extraction system (6) without air intake, and wherein said extraction system (6), in turn, comprises: a lower membrane (9) with a lower valve (8) housed in a central recess (20) of said lower membrane (9), which connects the inner space of the inner flexible container (4) with an intermediate space existing between the lower membrane (9) and an upper membrane (11); the upper membrane (11) being provided with a protrusion (21) on which pressure is exerted to cause a vacuum, and with an upper valve (10) which, housed in an eccentric recess (20') of the upper membrane (11), connects the intermediate space with the outside of the jar (1) and on which is incorporated a stopper (18) with an outlet orifice (19), such that, in the rest position, the product contained in the intermediate space does not come into contact with the product contained inside the inner flexible container (4), wherein the inner flexible container (4) is removable and replaceable the morphology of the lower (9) and upper (11) membranes defining a first chamber (13a), and a second chamber (13b) in the intermediate space between them in correspondence with the respective lower (8) and upper (10) valves, wherein the inner flexible container (4) is incorporated in a rigid housing (23) to which it is attached through a flange (14) provided for in said inner flexible container (4), wherein the lower membrane (9) has an eccentric hole (24), wherein the eccentric recess (20') of the upper membrane (11) into which the upper valve (10) is incorporated fits, defining the first chamber (13a) of the intermediate space, the jar being **characterized in that** the central recess (20) of the lower membrane (9) is prolonged on its upper part in a lateral depression (25) the shape, size and position of which coincide, complementarily, with the shape, size and position of the protrusion (21) of the upper membrane (11) defining the second chamber (13b) of the intermediate space.

2. The jar for cosmetics or other liquid or pasty products, according to claim 1, wherein the rigid housing (23) of the inner flexible container (4) has an upper edge (23a), which rises on said inner flexible container (4), where the two membranes (9, 11) of the extraction system fit, which, in turn, are attached to the neck (12) of the outer container (2).

3. The jar for cosmetics or other liquid or pasty products, according to claim 2, wherein, on the inner side of the upper edge (23a) of the rigid housing (23), is provided an inner step (26) where the flange (14) of the inner flexible container (4) fits.

4. The jar for cosmetics or other liquid or pasty products, according to claim 3, wherein, on the outer side of the upper edge (23a) of the rigid housing (23), is provided an outer edge (27) that rests on a pocket (28) of the inner wall of the neck (12) of the outer container (2).

5. The jar for cosmetics or other liquid or pasty products, according to any of claims 2 to 4, wherein the upper membrane (11) has a double perimeter skirt (16) that defines a groove (17) that fits with the upper edge of the neck (12) of the outer container (2) while pressing against the upper edge (23a) of the rigid housing (23).

6. The jar for cosmetics or other liquid or pasty products, according to any of the prior claims, wherein the lower membrane (9) has a lower perimeter skirt (29) and a lower tubular extension (30) that define the walls of the central recess (20) of this lower membrane (9).

7. The jar for cosmetics or other liquid or pasty products, according to any of the prior claims, wherein the stopper (18) with the outlet orifice (19) that closes the upper valve (10) is fitted into the eccentric recess (20') of the upper membrane (11), flush with the surface thereof.

## Patentansprüche

1. Gefäß für Kosmetika oder andere flüssige oder pastöse Produkte, umfassend einen Außenbehälter (2), einen flexiblen Innenbehälter (4), der die Kosmetika oder das Produkt enthält, und ein luftzufuhrfreies Entnahmesystem (6), wobei das genannte Entnahmesystem (6) seinerseits Folgendes umfasst: eine untere Membran (9) mit einem unteren Ventil (8), untergebracht in einer zentralen Aussparung (20) der genannten unteren Membran (9), das den Innenraum des flexiblen Innenbehälters (4) mit einem zwischen der unteren Membran (9) und einer oberen Membran (11) vorhandenen Zwischenraum verbindet; wobei die obere Membran (11) einen Vorsprung (21) aufweist, auf den zur Erzeugung eines Vakuums Druck ausgeübt wird, sowie ein oberes Ventil (10), untergebracht in einer außermittigen Aussparung (20') der oberen Membran (11), das den Zwischenraum mit der Außenseite des Gefäßes (1) verbindet und in das ein Verschluss (18) mit einer Auslassöffnung (19) derart integriert ist, dass in der Ruheposition das im Zwischenraum enthaltene Produkt nicht mit dem im flexiblen Innenbehälter (4) enthaltenen Produkt in Berührung kommt, wobei der flexible Innenbehälter (4) entnehmbar und austauschbar ist und durch die Formgebung der unteren Membran (9) und der oberen (11) Membran eine erste Kammer (13a) und eine zweite Kammer (13b) im Zwischenraum zwischen den beiden Membranen in Übereinstimmung mit dem jeweiligen unteren (8) und oberen (10) Ventil definiert sind, wobei der flexible Innenbehälter (4) in ein starres Gehäuse (23) integriert und daran mit einem in dem genannten flexiblen Innenbehälter (4) vorgesehenen Flansch (14) befestigt ist, wobei die untere Membran (9) ein außermittiges Loch (24) aufweist, in das die außermittige Aussparung (20') der oberen Membran (11), in die das obere Ventil (10) integriert ist, passt und so die erste Kammer (13a) des Zwischenraums bildet, wobei das Gefäß **dadurch gekennzeichnet ist, dass** die zentrale Aussparung (20) der unteren Membran (9) in ihrem oberen Teil in einer seitlichen Einsenkung (25) verlängert ist, deren Form, Größe und Position komplementär mit Form, Größe und Position des Vorsprungs (21) der oberen Membran (11), die die zweite Kammer (13b) des Zwischenraums definiert, übereinstimmen.

2. Gefäß für Kosmetika oder andere flüssige oder pastöse Produkte nach Anspruch 1, wobei das starre Gehäuse (23) des flexiblen Innenbehälters (4) einen oberen Rand (23a) aufweist, der auf dem genannten flexiblen Innenbehälter (4) emporragt und in den die beiden Membranen (9, 11) des Entnahmesystems, die ihrerseits am Hals (12) des Außenbehälters (2) befestigt sind, passen.

3. Gefäß für Kosmetika oder andere flüssige oder pastöse Produkte nach Anspruch 2, wobei sich innenseitig am oberen Rand (23a) des starren Gehäuses (23) eine innere Stufe (26) befindet, in die der Flansch (14) des flexiblen Innenbehälters (4) passt.

4. Gefäß für Kosmetika oder andere flüssige oder pastöse Produkte nach Anspruch 3, wobei sich außenseitig am oberen Rand (23a) des starren Gehäuses (23) eine Außenkante (27) befindet, die auf einer Vertiefung (28) an der Innenwand des Halses (12) des Außenbehälters (2) aufliegt.

5. Gefäß für Kosmetika oder andere flüssige oder pastöse Produkte nach einem der Ansprüche 2 bis 4, wobei die obere Membran (11) eine umlaufende Doppelschürze (16) aufweist, die eine Nut (17) bildet, die mit dem oberen Rand des Halses (12) des Außenbehälters (2) abschließt, wenn sie gegen den oberen Rand (23a) des starren Gehäuses (23) gedrückt wird.

6. Gefäß für Kosmetika oder andere flüssige oder pastöse Produkte nach einem der vorstehenden Ansprüche, wobei die untere Membran (9) eine untere umlaufende Schürze (29) und eine untere röhrenförmige Verlängerung (30), die die Wände der zentralen Aussparung (20) dieser unteren Membran (9) definieren, aufweist.

7. Gefäß für Kosmetika oder andere flüssige oder pastöse Produkte nach einem der vorstehenden Ansprüche, wobei der Verschluss (18) mit der das obere Ventil (10) verschließenden Auslassöffnung (19) in die außermittige Aussparung (20') der oberen Membran (11) passt und mit deren Oberfläche bündig abschließt.

## Revendications

1. Pot pour produits cosmétiques ou autres produits liquides ou pâteux, comprenant un récipient extérieur (2), un récipient intérieur flexible (4) contenant le cosmétique ou le produit, et un système d'extraction (6) sans prise d'air, dans lequel ledit système d'extraction (6) comprend à son tour : une membrane inférieure (9) avec une valve inférieure (8) logée dans un évidement central (20) de ladite membrane inférieure (9), qui relie l'espace intérieur du récipient intérieur flexible (4) avec un espace intermédiaire existant entre la membrane inférieure (9) et une membrane supérieure (11) ; ladite membrane supérieure (11) étant pourvue d'une saillie (21) sur laquelle une pression est exercée pour provoquer une dépression, et d'une valve supérieure (10) qui, logée dans un évidement excentré (20') de la membrane supérieure (11), relie l'espace intermédiaire avec l'extérieur du pot (1) et sur laquelle est incorporé un bouchon (18) avec un orifice de sortie (19), de telle sorte qu'en position de repos, le produit contenu dans l'espace intermédiaire n'entre pas en contact avec le produit contenu à l'intérieur du récipient intérieur flexible (4), dans lequel le récipient intérieur flexible (4) est amovible et remplaçable, la morphologie des membranes inférieure (9) et supérieure (11) définissant une première chambre (13a), et une seconde chambre (13b) dans l'espace intermédiaire entre elles en correspondance avec les valves respectives inférieure (8) et supérieure (10), dans lequel le récipient intérieur flexible (4) est incorporé dans un logement rigide (23) auquel il est fixé au moyen d'une bride (14) prévue dans ledit récipient intérieur flexible (4), dans lequel la membrane inférieure (9) présente un trou excentré (24), dans lequel s'adapte l'évidement excentré (20') de la membrane supérieure (11) dans lequel la valve supérieure (10) est incorporée, définissant la première chambre (13a) de l'espace intermédiaire, le pot étant **caractérisé en ce que** l'évidement central (20) de la membrane inférieure (9) est prolongé sur sa partie supérieure par une dépression latérale (25) dont la forme, la taille et la position coïncident de façon complémentaire avec la forme, la taille et la position de la saillie (21) de la membrane supérieure (11) définissant la seconde chambre (13b) de l'espace intermédiaire.

2. Pot pour produits cosmétiques ou autres produits liquides ou pâteux, selon la revendication 1, dans lequel le logement rigide (23) du récipient intérieur flexible (4) présente un bord supérieur (23a), qui s'élève sur ledit récipient intérieur flexible (4), où s'ajustent les deux membranes (9, 11) du système d'extraction qui, à leur tour, sont fixées au col (12) du récipient extérieur (2).

3. Pot pour produits cosmétiques ou autres produits liquides ou pâteux, selon la revendication 2, dans lequel, sur la face intérieure du bord supérieur (23a) du logement rigide (23), est prévue une marche intérieure (26) où s'ajuste la bride (14) du récipient intérieur flexible (4).

4. Pot pour produits cosmétiques ou autres produits liquides ou pâteux, selon la revendication 3, dans lequel, sur la face extérieure du bord supérieur (23a) du logement rigide (23), est prévu un rebord extérieur (27) qui repose sur une encoche (28) de la paroi intérieure du col (12) du récipient extérieur (2).

5. Pot pour produits cosmétiques ou autres produits liquides ou pâteux, selon l'une quelconque des revendications 2 à 4, dans lequel la membrane supérieure (11) présente une double jupe périphérique (16) qui définit une gorge (17) s'ajustant avec le bord supérieur du col (12) du récipient extérieur (2) tout en pressant contre le bord supérieur (23a) du logement rigide (23).

6. Pot pour produits cosmétiques ou autres produits liquides ou pâteux, selon l'une quelconque des revendications précédentes, dans lequel la membrane inférieure (9) présente une jupe périphérique inférieure (29) et un prolongement tubulaire inférieur (30) qui définissent les parois de l'évidement central (20) de ladite membrane inférieure (9).

7. Pot pour produits cosmétiques ou autres produits liquides ou pâteux, selon l'une quelconque des revendications précédentes, dans lequel le bouchon (18) avec l'orifice de sortie (19) qui ferme la valve supérieure (10) est ajusté dans l'évidement excentré (20') de la membrane supérieure (11), à fleur de la surface de celle-ci.
